# EUROPEAN PATENT APPLICATION

(11) **EP 4 704 228 A1**
(43) Date of publication of application: **04.03.2026**
(21) Application number: 23934336.1
(22) Date of filing: 23.04.2023
(51) Int. Cl.: H01M 50/131

(54) **CYLINDRICAL SECONDARY BATTERY AND ELECTRONIC DEVICE**

(71) Applicant: Xiamen Ampace Technology Limited, Xiamen City, Fujian Province 361000 (CN)
(72) Inventor: LI, Chunhua, Xiamen, Fujian 361000 (CN); FANG, Ye, Xiamen, Fujian 361000 (CN); HAN, Xianglong, Xiamen, Fujian 361000 (CN)
(74) Representative: Kraus & Lederer PartGmbB
(86) International application number: PCT/CN2023/090047
(87) International publication number: WO 2024/221130

(57) **Abstract**

The present application provides a cylindrical secondary battery and an electronic device, where the cylindrical secondary battery includes an electrode assembly and a housing accommodating the electrode assembly, the electrode assembly including a positive electrode plate, a negative electrode plate, and a separator disposed between the positive electrode plate and the negative electrode plate. A thickness of the housing is a mm, a yield strength of the housing is b MPa, and a and b satisfy: 0.3 < 3a + 0.001b < 1.8, and 0.05 ≤ a ≤ 0.5.

## Description

### TECHNICAL FIELD

The present application relates to the field of electrochemical technology, and particularly to a cylindrical secondary battery and an electronic device.

### BACKGROUND

Cylindrical secondary batteries (such as lithium-ion batteries) have advantages such as standardized products, high automation, low cost, good consistency, and high energy density, and can be widely used in irregularly shaped housings in practical applications. However, cylindrical secondary batteries also have their own issues. For example, during vibration and impact tests of the cylindrical secondary batteries, axial movement may occur, leading to failure.

Existing cylindrical secondary batteries often use a swelling tape to increase friction, thereby increasing the impact test pass rate of the cylindrical secondary batteries. However, this approach leads to a reduction in the energy density of the cylindrical secondary battery. Therefore, developing a new technical solution to increase the impact test pass rate of cylindrical secondary batteries has become an urgent technical problem to be solved by those skilled in the art.

### SUMMARY

The purpose of some embodiments of the present application is to provide a cylindrical secondary battery and an electronic device to alleviate the issue of failure of the cylindrical secondary battery due to insufficient strength of the housing, thereby increasing the impact test pass rate of the cylindrical secondary battery.

It should be noted that, in the summary of the present application, the present application is explained by using an example of a cylindrical lithium-ion battery being a cylindrical secondary battery, but the cylindrical secondary battery of the present application is not limited to cylindrical lithium-ion batteries. The specific technical solutions are as follows:

According to a first aspect, the present application provides a cylindrical secondary battery, including an electrode assembly and a housing accommodating the electrode assembly, where the electrode assembly includes a positive electrode plate, a negative electrode plate, and a separator disposed between the positive electrode plate and the negative electrode plate; and a thickness of the housing is a mm, a yield strength of the housing is b MPa, and a and b satisfy: 0.3 < 3a + 0.001b < 1.8, and 0.05 ≤ a ≤ 0.5. By controlling the thickness of the housing and the value of 3a + 0.001b within these ranges, the issue of failure of the cylindrical secondary battery due to insufficient strength of the housing can be alleviated, thereby increasing the impact test pass rate of the cylindrical secondary battery. Additionally, the energy density and cycling performance of the cylindrical secondary battery can be improved.

Further, 150 ≤ b ≤ 350. By controlling the yield strength b of the housing within this range, the impact test pass rate of the cylindrical secondary battery can be increased. Additionally, the cycling performance of the cylindrical secondary battery can be improved.

In some embodiments, 180 ≤ b ≤ 230. By controlling the yield strength b of the housing within this range, the cylindrical secondary battery achieves a higher impact test pass rate and better cycling performance.

In some embodiments, 0.1 ≤ a ≤ 0.2. By controlling the thickness of the housing within this range, the cylindrical secondary battery achieves a higher impact test pass rate and higher energy density.

In some embodiments of the present application, a gap between the electrode assembly and the housing is C mm, a diameter of the electrode assembly is d mm, and C and d satisfy: C = kd, where k is a proportionality coefficient 0.005 ≤ k ≤ 0.04, and 1 ≤ d ≤ 100. By controlling the proportionality coefficient k and the diameter of the electrode assembly within these ranges, the impact test pass rate of the cylindrical secondary battery can be increased.

In some embodiments, 0.01 ≤ k ≤ 0.03. By controlling the proportionality coefficient k within this range, the cylindrical secondary battery achieves a higher impact test pass rate.

In some embodiments, 15 ≤ d ≤ 50. By controlling the diameter d of the electrode assembly within this range, the cylindrical secondary battery achieves a higher impact test pass rate.

In some embodiments of the present application, the negative electrode plate includes a negative electrode current collector, and a volume proportion of the negative electrode current collector in the electrode assembly is 10% to 70%. By controlling the volume proportion of the negative electrode current collector in the electrode assembly within this range, the impact test pass rate of the cylindrical secondary battery can be increased.

In some embodiments, the volume proportion of the negative electrode current collector in the electrode assembly is 20% to 40%. By controlling the volume proportion of the negative electrode current collector in the electrode assembly within this range, the cylindrical secondary battery achieves a higher impact test pass rate.

In some embodiments of the present application, the negative electrode current collector is copper foil. By selecting copper foil as the negative electrode current collector, the current collector can have good flexibility, which is beneficial to increasing the impact test pass rate of the cylindrical secondary battery.

In some embodiments of the present application, a material of the housing is selected from any one of 45# carbon steel, 304 stainless steel, Q210 carbon steel, Q220 carbon steel, Q235 carbon steel, Q350 carbon steel, 26# carbon steel, 28# carbon steel, 36# carbon steel, pure iron, 40Cr, 20CrMnTi, 35CrMo, or 42CrMo4. By selecting a housing made of these materials, the impact test pass rate and cycling performance of the cylindrical secondary battery can be improved.

According to a second aspect, the present application provides an electronic device including the cylindrical secondary battery provided in the first aspect of the present application. Therefore, the electronic device has good safety performance.

Beneficial effects of these embodiments of the present application:

According to the cylindrical secondary battery provided by these embodiments of the present application, by controlling the thickness of the housing and the value of 3a + 0.001b within the above ranges, the issue of failure of the cylindrical secondary battery due to insufficient strength of the housing can be alleviated, thereby increasing the impact test pass rate of the cylindrical secondary battery and improving the safety performance of the cylindrical secondary battery in mechanical tests. Additionally, the energy density and cycling performance of the cylindrical secondary battery can be improved.

Certainly, any product or method implementing the present application does not necessarily need to achieve all the advantages described above simultaneously.

### BRIEF DESCRIPTION OF DRAWINGS

The drawings described herein are provided to offer a further understanding of the present application and constitute a part of the present application. The schematic embodiments and their descriptions of the present application are used to explain the present application and do not constitute an improper limitation of the present application.

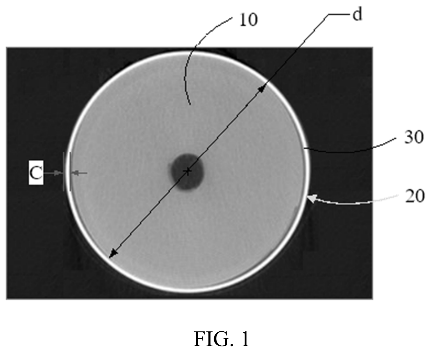

FIG. 1 is a computed tomography (CT) morphology diagram of a cylindrical secondary battery according to some embodiments of the present application.

### DETAILED DESCRIPTION

The technical solutions in some embodiments of the present application will be clearly and completely described below in conjunction with the drawings in these embodiments of the present application. Obviously, the described embodiments are only some embodiments of the present application, not all embodiments. Based on these embodiments in the present application, all other embodiments obtained by those of ordinary skill in the art based on the present application fall within the protection scope of the present application.

It should be noted that, in some specific embodiments of the present application, the present application is explained by using an example of a cylindrical lithium-ion battery being a cylindrical secondary battery, but the cylindrical secondary battery of the present application is not limited to cylindrical lithium-ion batteries.

According to a first aspect, the present application provides a cylindrical secondary battery, including an electrode assembly and a housing accommodating the electrode assembly, where the electrode assembly includes a positive electrode plate, a negative electrode plate, and a separator disposed between the positive electrode plate and the negative electrode plate. A thickness of the housing is a mm, a yield strength of the housing is b MPa, and a and b satisfy: 0.3 < 3a + 0.001b < 1.8, and 0.05 ≤ a ≤ 0.5. For example, a is 0.05, 0.1, 0.15, 0.2, 0.25, 0.3, 0.35, 0.4, 0.45, 0.5, or any value within a range defined by any two of these values. The value of 3a + 0.001b is 0.31, 0.4, 0.5, 0.6, 0.7, 0.8, 0.9, 1.0, 1.1, 1.2, 1.3, 1.4, 1.5, 1.6, 1.7, 1.79, or any value within a range defined by any two of these values. If the thickness of the housing is less than 0.05 mm, and/or the value of 3a + 0.001b is less than or equal to 0.3, the thickness of the housing is too small and/or the yield strength of the housing is too low, resulting in insufficient strength of the housing. When the cylindrical secondary battery is subjected to an external impact, the housing is insufficient to protect the electrode assembly, which leads to deformation or severe damage to the electrode assembly, thereby affecting its operational performance and reducing the impact test pass rate of the cylindrical secondary battery. If the thickness of the housing is greater than 0.5 mm, and/or the value of 3a + 0.001b is greater than or equal to 1.8, the thickness of the housing is too large and/or the yield strength of the housing is too high, which increases the volume and mass of the cylindrical secondary battery, affecting its energy density or affecting the cycling and swelling of the electrode assembly, thus impacting the cycling performance of the cylindrical secondary battery. Therefore, by controlling the thickness of the housing and the value of 3a + 0.001b within the above ranges, the issue of failure of the cylindrical secondary battery due to insufficient strength of the housing can be alleviated, thereby increasing the impact test pass rate of the cylindrical secondary battery and improving the safety performance of the cylindrical secondary battery in mechanical tests. Additionally, the energy density and cycling performance of the cylindrical secondary battery can be improved.

Further, 150 ≤ b ≤ 350. For example, b is 150, 170, 190, 210, 230, 250, 270, 290, 310, 330, 350, or any value within a range defined by any two of these values. By controlling the yield strength b of the housing within this range, the housing can provide good protection to the electrode assembly and facilitate the cycling and swelling of the electrode assembly. This can increase the impact test pass rate of the cylindrical secondary battery and improve the cycling performance of the cylindrical secondary battery.

In some embodiments, 180 ≤ b ≤ 230. For example, b is 180, 190, 200, 210, 220, 230, or any value within a range defined by any two of these values. By controlling the yield strength b of the housing within this range, the cylindrical secondary battery achieves a higher impact test pass rate and better cycling performance.

In some embodiments, 0.1 ≤ a ≤ 0.2. For example, a is 0.1, 0.11, 0.12, 0.13, 0.14, 0.15, 0.16, 0.17, 0.18, 0.19, 0.2, or any value within a range defined by any two of these values. By controlling the thickness of the housing within this range, the cylindrical secondary battery achieves a higher impact test pass rate and higher energy density.

In some embodiments of the present application, the gap between the electrode assembly and the housing is C mm, the diameter of the electrode assembly is d mm, and C and d satisfy: C = kd, where k is a proportionality coefficient, 0.005 ≤ k ≤ 0.04, and 1 ≤ d ≤ 100. For example, k is 0.005, 0.01, 0.015, 0.02, 0.025, 0.03, 0.035, 0.04, or any value within a range defined by any two of these values. For example, d is 1, 10, 20, 30, 40, 50, 60, 70, 80, 90, 100, or any value within a range defined by any two of these values. By controlling the proportionality coefficient k and the diameter of the electrode assembly within these ranges, the gap between the electrode assembly and the housing is appropriate, reducing the risk of short-circuit failure due to misalignment of the positive electrode plate and the negative electrode plate caused by movement of the electrode assembly inside the housing. The housing can effectively protect the electrode assembly. Additionally, the thickness and yield strength of the housing, combined with the gap between the electrode assembly and the housing, can buffer the impact force of heavy objects on the cylindrical secondary battery, reducing the probability of deformation or severe damage to the electrode assembly. As a result, the cylindrical secondary battery achieves a higher impact test pass rate.

Those skilled in the art should understand that, as shown in FIG. 1, the "gap 30 between the electrode assembly 10 and the housing 20" in the present application refers to the distance from the outermost edge of the electrode assembly 10 to the inner surface of the housing 20, which is C mm. Ideally, the distance from the outermost edge of the electrode assembly 10 to the inner surface of the housing 20 is equal. However, due to impacts on the cylindrical secondary battery during production, storage, or use, deformation of the housing 20 may be caused, resulting in slight variations in the distance from the outermost edge of the electrode assembly 10 to the inner surface of the housing 20. When the gap 30 between the electrode assembly 10 and the housing 20 is measured, the distance from the outermost edge of the electrode assembly 10 to the inner surface of the housing 20 is measured at eight equally spaced points around the housing 20, and the minimum value is taken as the gap value C.

In some embodiments, 0.01 ≤ k ≤ 0.03. For example, k is 0.01, 0.015, 0.02, 0.025, 0.03, or any value within a range defined by any two of these values. By controlling the proportionality coefficient k within this range, the cylindrical secondary battery achieves a higher impact test pass rate.

In some embodiments, 15 ≤ d ≤ 50. For example, d is 15, 18 (for example, cylindrical lithium-ion battery model 18650), 20, 21 (for example, cylindrical lithium-ion battery model 21700), 25, 26 (for example, cylindrical lithium-ion battery model 26650), 30, 35, 40, 45, 50, or any value within a range defined by any two of these values. By controlling the diameter d of the electrode assembly within this range, the cylindrical secondary battery achieves a higher impact test pass rate.

The present application has no particular limitation on the method of controlling the diameter of the electrode assembly, as long as it achieves the purpose of the present application. For example, it can be achieved by controlling at least one of the thickness of the negative electrode plate, the length of the negative electrode plate, the thickness of the positive electrode plate, the length of the positive electrode plate, or the thickness of the separator.

In some embodiments of the present application, the negative electrode plate includes a negative electrode current collector, and the volume proportion of the negative electrode current collector in the electrode assembly is 10% to 70%. For example, the volume proportion of the negative electrode current collector in the electrode assembly is 10%, 20%, 30%, 40%, 50%, 60%, 70%, or any value within a range defined by any two of these values. By controlling the volume proportion of the negative electrode current collector in the electrode assembly within this range, the electrode assembly has good flexibility. When the cylindrical secondary battery is impacted by external heavy objects or other items, the electrode assembly can buffer the impact force generated from impacts on heavy objects or other items, reducing the probability of deformation or severe damage to the electrode assembly, thereby increasing the impact test pass rate of the cylindrical secondary battery. The calculation formula for the "volume of the electrode assembly" is hπ(d/2)², where π is 3.14, and h is the height of the electrode assembly, the height of the electrode assembly being the same as the width of the negative electrode plate itself.

In some embodiments, the volume proportion of the negative electrode current collector in the electrode assembly is 20% to 40%. For example, the volume proportion of the negative electrode current collector in the electrode assembly is 20%, 25%, 30%, 35%, 40%, or any value within a range defined by any two of these values. By controlling the volume proportion of the negative electrode current collector in the electrode assembly within this range, the cylindrical secondary battery achieves a higher impact test pass rate.

The present application has no particular limitation on the method of controlling the volume proportion of the negative electrode current collector in the electrode assembly, as long as it achieves the purpose of the present application. For example, it can be achieved by controlling at least one of the thickness of the negative electrode current collector, the thickness of the negative electrode material layer, the thickness of the positive electrode plate, or the thickness of the separator.

In some embodiments of the present application, the negative electrode current collector is copper foil. By selecting copper foil as the negative electrode current collector, the current collector can have good flexibility. When the cylindrical secondary battery is impacted by external heavy objects or other items, the electrode assembly can buffer the impact force generated from impacts on heavy objects or other items, reducing the probability of deformation or severe damage to the electrode assembly, thereby increasing the impact test pass rate of the cylindrical secondary battery.

In some embodiments of the present application, the material of the housing is selected from any one of 45# carbon steel, 304 stainless steel, Q210 carbon steel, Q220 carbon steel, Q235 carbon steel, Q350 carbon steel, 26# carbon steel, 28# carbon steel, 36# carbon steel, pure iron, 40Cr, 20CrMnTi, 35CrMo, or 42CrMo4. When the material of the housing is pure iron, the inner surface of the housing is provided with an anti-corrosion coating to reduce the possibility of reaction between the housing and the electrolyte. The present application has no particular limitation on the anti-corrosion coating, which can be any anti-corrosion coating known in the art, and those skilled in the art can select it based on actual needs, as long as it achieves the purpose of the present application. By selecting a housing made of the above materials, its yield strength falls within the range of the present application, enabling the housing to provide good protection to the electrode assembly and facilitate the cycling and swelling of the electrode assembly. This can increase the impact test pass rate of the cylindrical secondary battery and improve the cycling performance of the cylindrical secondary battery.

In some embodiments of the present application, the negative electrode plate may further include a negative electrode material layer, the negative electrode material layer being disposed on at least one surface of the negative electrode current collector. In some embodiments, the negative electrode material layer is disposed on one surface of the negative electrode current collector, while in some other embodiments, the negative electrode material layer is disposed on both surfaces of the negative electrode current collector, where the "surface" may be a partial or entire surface of the negative electrode current collector. The negative electrode material layer of the present application includes a negative electrode active material. The present application has no particular limitation on the type of negative electrode active material, as long as it achieves the purpose of the present application. For example, the negative electrode active material may include at least one of natural graphite, artificial graphite, mesocarbon microbeads (MCMB), hard carbon, soft carbon, silicon, silicon-carbon composite, SiOₓ (0 < x < 2), Li-Sn alloy, Li-Sn-O alloy, Sn, SnO, SnO₂, spinel-structured lithium titanate Li₄Ti₅O₁₂, Li-Al alloy, or metallic lithium. In the present application, there is no particular limitation on the thickness of the negative electrode current collector or the negative electrode material layer, as long as it achieves the purpose of the present application. For example, the thickness of the negative electrode current collector is 6 µm to 10 µm, and the thickness of the negative electrode material layer is 30 µm to 130 µm. Optionally, the negative electrode material layer may further include at least one of a conductive agent, a stabilizer, or a binder. The present application has no particular limitation on the types of the negative electrode conductive agent, stabilizer, and negative electrode binder in the negative electrode material layer, as long as they achieve the purpose of the present application. The present application has no particular limitation on the mass ratio of the negative electrode active material, negative electrode conductive agent, thickener, and negative electrode binder in the negative electrode material layer, as long as it achieves the purpose of the present application. For example, the mass ratio of the negative electrode active material, negative electrode conductive agent, thickener, and negative electrode binder in the negative electrode material layer is (96-98):(0.5-2):(0-1.5):(1.0-1.9).

The present application has no particular limitation on the positive electrode plate, as long as it achieves the purpose of the present application. For example, the positive electrode plate includes a positive electrode current collector and a positive electrode material layer disposed on at least one surface of the positive electrode current collector. In some embodiments, the positive electrode material layer is disposed on one surface of the positive electrode current collector, while in some other embodiments, the positive electrode material layer is disposed on both surfaces of the positive electrode current collector, where the "surface" may be a partial or entire surface of the positive electrode current collector. The present application has no particular limitation on the type of positive electrode current collector, as long as it achieves the purpose of the present application. For example, the positive electrode current collector may include aluminum foil, aluminum alloy foil, or the like. The positive electrode active material layer of the present application includes a positive electrode active material. The present application has no particular limitation on the type of positive electrode active material, as long as it includes the transition metal elements of the present application and achieves the purpose of the present application. For example, the positive electrode active material may include at least one of lithium nickel cobalt manganese oxide (LiNi_{0.8}Co_{0.1}Mn_{0.1}O₂), lithium nickel cobalt aluminum oxide, lithium iron phosphate, lithium-rich manganese-based materials, lithium cobalt oxide (LiCoO₂), lithium manganese oxide, lithium manganese iron phosphate, or lithium titanate. In the present application, the positive electrode active material may further include non-metallic elements, such as at least one of fluorine, phosphorus, boron, chlorine, silicon, or sulfur, which can further improve the stability of the positive electrode active material. In the present application, there is no particular limitation on the thickness of the positive electrode current collector or the positive electrode active material layer, as long as it achieves the purpose of the present application. For example, the thickness of the positive electrode current collector is 5 µm to 20 µm, and further, the thickness of the positive electrode current collector may be 6 µm to 18 µm. The thickness of the positive electrode active material layer is 30 µm to 120 µm.

Optionally, the positive electrode active material layer may further include a positive electrode conductive agent and a positive electrode binder. The present application has no particular limitation on the types of positive electrode conductive agent and positive electrode binder in the positive electrode active material layer, as long as they achieve the purpose of the present application. The present application has no particular limitation on the mass ratio of the positive electrode active material, positive electrode conductive agent, and positive electrode binder in the positive electrode active material layer, and those skilled in the art can select it based on actual needs, as long as it achieves the purpose of the present application. For example, the mass ratio of the positive electrode active material, positive electrode conductive agent, and positive electrode binder in the positive electrode active material layer is (95-98):(0.5-2.5):(1.5-3.4).

The present application has no particular limitation on the separator, as long as it achieves the purpose of the present application. For example, the material of the separator may include, but is not limited to, at least one of polyolefin (PO)-based materials such as polyethylene (PE) and polypropylene (PP), polyester (for example, polyethylene terephthalate (PET) film), cellulose, polyimide (PI), polyamide (PA), spandex, or aramid. The type of separator may include at least one of woven film, non-woven film, microporous film, composite film, calendered film, or spun film.

The cylindrical secondary battery of the present application may further include an electrolyte, and the electrolyte is accommodated in the housing. The present application has no particular limitation on the type of electrolyte, which can be any electrolyte known in the art, as long as it achieves the purpose of the present application.

The present application has no particular limitation on the type of cylindrical secondary battery, which may include any device undergoing an electrochemical reaction. For example, the cylindrical secondary battery may include, but is not limited to, cylindrical lithium metal secondary batteries, cylindrical lithium-ion secondary batteries (lithium-ion batteries), cylindrical sodium-ion secondary batteries (sodium-ion batteries), cylindrical lithium polymer secondary batteries, and cylindrical lithium-ion polymer secondary batteries.

The present application has no particular limitation on the preparation method of the cylindrical secondary battery, and any preparation method known in the art can be used, as long as it achieves the purpose of the present application. For example, the preparation method of the cylindrical secondary battery includes, but is not limited to, the following steps: stacking the positive electrode plate, separator, and negative electrode plate in sequence, winding or folding them as needed to obtain an electrode assembly being of a wound structure, placing the electrode assembly in the housing, injecting the electrolyte into the housing, and sealing it to obtain the cylindrical secondary battery.

According to a second aspect, the present application provides an electronic device including the cylindrical secondary battery provided in the first aspect of the present application. Therefore, the electronic device has good safety performance.

The electronic device of the present application is not particularly limited and may be any electronic device known in the prior art. For example, the electronic device may include, but is not limited to, notebook computers, pen-input computers, mobile computers, e-book readers, portable phones, portable fax machines, portable copiers, portable printers, head-mounted stereo headphones, video recorders, LCD TVs, handheld cleaners, portable CD players, mini discs, transceivers, electronic organizers, calculators, memory cards, portable recorders, radios, backup power supplies, motors, automobiles, motorcycles, power-assisted bicycles, bicycles, lighting fixtures, toys, gaming consoles, clocks, power tools, flashlights, cameras, large household batteries, and lithium-ion capacitors.

### Examples

Examples and comparative examples below are provided to describe some embodiments of the present application in more detail. Various tests and evaluations were conducted according to the following methods.

### Test methods and equipment:

### Yield strength test:

Equipment model: WD-10A universal testing machine.
Test method: GB/T 228-2002 Metallic Materials-Tensile Testing at Ambient Temperature.

### Test for gap C between electrode assembly and housing:

A CT morphology diagram was obtained through CT three-dimensional scanning, and the size of gap C was measured using a scale. Specifically, a distance from an outermost edge of the electrode assembly to an inner surface of the housing was measured at eight equally spaced points around the housing, and a minimum value was taken as the gap value C.

### Test for impact test pass rate:

The lithium-ion batteries of each example and comparative example were charged at a constant current of 2C to 4.2 V, and then charged at a constant voltage to 0.05C to reach a fully charged state. The fully charged lithium-ion battery was placed on a test platform, and a cylindrical rod with a diameter of φ15.8 ± 0.1 mm and a length of at least 6 cm was placed at the center of the wide surface of the lithium-ion battery. A longitudinal axis of the lithium-ion battery was parallel to the surface of the test platform and perpendicular to the longitudinal axis of the cylindrical rod. A 9.1 ± 0.1 kg weight was dropped vertically from a height of 610 ± 25 mm in a free state, landing at the intersection of the cylindrical rod and the lithium-ion battery.

Determining criteria: no fire or explosion indicated a pass.

Twenty lithium-ion batteries in each example or comparative example were tested, and the impact test pass rate = number of passes / 20.

### Example 1

### <Preparation of positive electrode plate>

A positive electrode active material lithium nickel cobalt manganese oxide (LiNi_{0.8}Co_{0.1}Mn_{0.1}O₂), a positive electrode binder polyvinylidene fluoride (PVDF, weight-average molecular weight of 70 × 10⁵), and a positive electrode conductive agent carbon black were mixed at a mass ratio of 94.8:2.8:2.4, and N-methylpyrrolidone (NMP) was added as a solvent. The mixture was stirred under a vacuum mixer until a solid content of 75wt% was achieved, forming a uniform positive electrode slurry. The positive electrode slurry was uniformly applied to one surface of a 13 µm thick positive electrode current collector aluminum foil and dried at 90°C to obtain a positive electrode plate with a single surface coated with a positive electrode material layer. The above steps were repeated on the other surface of the aluminum foil to obtain a positive electrode plate with both surfaces coated with the positive electrode material layer. The plate was then cold-pressed (with a compacted density of 3.4 g/cm³), cut, and welded with tabs to obtain a positive electrode plate with specifications of 60 mm × 1580 mm for use. The coating weight of the positive electrode material layer was 18 mg/cm².

### <Preparation of negative electrode plate>

A negative electrode active material artificial graphite, a thickener carboxymethyl cellulose (CMC, with a weight-average molecular weight of 7 × 10⁵), and a negative electrode binder styrene-butadiene rubber (SBR, with a weight-average molecular weight of 50 × 10⁵) were mixed at a mass ratio of 97:1.7:1.3, and deionized water was added as a solvent. The mixture was stirred under a vacuum mixer until a solid content of 51wt% was achieved, forming a uniform negative electrode slurry. The negative electrode slurry was uniformly applied to one surface of a 25 µm thick negative electrode current collector copper foil and dried at 90°C to obtain a negative electrode plate with a single surface coated with a negative electrode material layer. The above steps were repeated on the other surface of the copper foil to obtain a negative electrode plate with both surfaces coated with the negative electrode material layer. The plate was then cold-pressed (with a compacted density of 1.55 g/cm³), cut, and welded with tabs to obtain a negative electrode plate with specifications of 62 mm × 1600 mm for use. The coating weight of the negative electrode material layer was 11 mg/cm².

### <Preparation of separator>

A 9 µm thick porous polyethylene film was used.

### <Preparation of electrolyte>

In an environment with a water content of less than 10 ppm, non-aqueous organic solvents ethylene carbonate (EC), diethyl carbonate (DEC), and propylene carbonate (PC) were mixed at a mass ratio of 30:40:30. Lithium hexafluorophosphate (LiPF₆) was added to the non-aqueous organic solvent, dissolved, and mixed well to obtain an electrolyte, where the concentration of LiPF₆ was 1 mol/L.

### <Preparation of lithium-ion battery>

The negative electrode plate, the separator, and the positive electrode plate prepared above were stacked in sequence and wound to obtain an electrode assembly with a wound structure. The electrode assembly was placed in a housing, and after top-side sealing, code spraying, vacuum drying, electrolyte injection, and standing at high temperature (45°C) for 12 h, the assembly was subjected to formation and capacity testing at 45°C, followed by edge cutting to obtain a cylindrical lithium-ion battery (in model 21700). The formation steps were: standing for 5 min, charging at a constant current of 0.3C for 180s, standing for 5 min, charging at a constant current of 0.5C for 900s, and standing for 5 min. The capacity testing steps were: standing for 5 min, charging at a constant current of 0.5C to 4.2 V, charging at constant voltage to 0.1C, standing for 5 min, discharging at a constant current of 0.5C to 2.5 V, and standing for 5 min.

The thickness a of the housing was 0.05 mm, the material of the housing was Q210 carbon steel, and the yield strength b was 210 MPa. The diameter of the electrode assembly d was 21 mm, and the gap C between the electrode assembly and the housing satisfied C = kd = 0.02 × 21 = 0.42 mm. The volume proportion of the negative electrode current collector in the electrode assembly was 40%.

### Examples 2 to 7

These examples were the same as Example 1, except for adjusting the relevant preparation parameters according to Table 1.

### Example 8

This example was the same as Example 5, except for adjusting the thickness of the negative electrode current collector to 6 µm in the <preparation of negative electrode plate> such that the volume proportion of the negative electrode current collector in the electrode assembly was 20%, and adjusting the material of the housing according to Table 1 such that the yield strength b of the housing was 150 MPa.

### Examples 9 to 15

These examples were the same as Example 8 except for adjusting the relevant preparation parameters according to Table 1.

### Example 16

This example was the same as Example 5, except for adjusting the thickness of the negative electrode current collector to 15 µm in the <preparation of negative electrode plate> such that the volume proportion of the negative electrode current collector in the electrode assembly was 35%, and adjusting the material of the housing according to Table 1 such that the yield strength b of the housing was 220 MPa.

### Examples 17 to 24

These examples were the same as Example 16, except for adjusting the relevant preparation parameters according to Table 1.

### Example 25

### <Preparation of positive electrode plate>

This example was the same as Example 21, except for controlling the thickness of the positive electrode current collector to 6 µm, the coating weight of the positive electrode material layer to 6 mg/cm², and the specifications of the positive electrode plate to 60 mm × 100 mm.

### <Preparation of negative electrode plate>

This example was the same as Example 21, except for controlling the thickness of the negative electrode current collector to 4 µm, the coating weight of the negative electrode material layer to 4 mg/cm², and the specifications of the negative electrode plate to 62 mm × 120 mm.

### Example 26

### <Preparation of positive electrode plate>

This example was the same as Example 21, except for controlling the thickness of the positive electrode current collector to 16 µm, the coating weight of the positive electrode material layer to 10 mg/cm², and the specifications of the positive electrode plate to 60 mm × 1200 mm.

### <Preparation of negative electrode plate>

This example was the same as Example 21, except for controlling the thickness of the negative electrode current collector to 13 µm, the coating weight of the negative electrode material layer to 7 mg/cm², and the specifications of the negative electrode plate to 62 mm × 1220 mm.

### Example 27

### <Preparation of positive electrode plate>

This example was the same as Example 21, except for controlling the thickness of the positive electrode current collector to 20 µm, the coating weight of the positive electrode material layer to 30 mg/cm², and the specifications of the positive electrode plate to 60 mm × 1600 mm.

### <Preparation of negative electrode plate>

This example was the same as Example 21, except for controlling the thickness of the negative electrode current collector to 20 µm, the coating weight of the negative electrode material layer to 20 mg/cm², and the specifications of the negative electrode plate to 62 mm × 2600 mm.

### Example 28

### <Preparation of positive electrode plate>

This example was the same as Example 21, except for controlling the thickness of the positive electrode current collector to 35 µm, the coating weight of the positive electrode material layer to 40 mg/cm², and the specifications of the positive electrode plate to 60 mm × 3800 mm.

### <Preparation of negative electrode plate>

This example was the same as Example 21, except for controlling the thickness of the negative electrode current collector to 16 µm, the coating weight of the negative electrode material layer to 28 mg/cm², and the specifications of the negative electrode plate to 62 mm × 4820 mm.

### Example 29

This example was the same as Example 5, except for adjusting the thickness of the negative electrode current collector to 2 µm in the <Preparation of negative electrode plate> such that the volume proportion of the negative electrode current collector in the electrode assembly was 10%, and adjusting the relevant parameters according to Table 1.

### Example 30

This example was the same as Example 29, except for adjusting the thickness of the negative electrode current collector to 4 µm in the <preparation of negative electrode plate> such that the volume proportion of the negative electrode current collector in the electrode assembly was 20%.

### Example 31

This example was the same as Example 29, except for adjusting the thickness of the negative electrode current collector to 6 µm in the <preparation of negative electrode plate> such that the volume proportion of the negative electrode current collector in the electrode assembly was 30%.

### Example 32

This example was the same as Example 29, except for adjusting the thickness of the negative electrode current collector to 25 µm in the <preparation of negative electrode plate> such that the volume proportion of the negative electrode current collector in the electrode assembly was 40%.

### Example 33

This example was the same as Example 29, except for adjusting the thickness of the negative electrode current collector to 35 µm in the <preparation of negative electrode plate> such that the volume proportion of the negative electrode current collector in the electrode assembly was 70%.

### Example 34

This example was the same as Example 29, except for adjusting the thickness of the negative electrode current collector to 40 µm in the <preparation of negative electrode plate> such that the volume proportion of the negative electrode current collector in the electrode assembly was 80%.

### Example 35

This example was the same as Example 29, except for adjusting the thickness of the negative electrode current collector to 1 µm in the <preparation of negative electrode plate> such that the volume proportion of the negative electrode current collector in the electrode assembly was 5%.

### Comparative Examples 1 to 6

These examples were the same as Example 1, except for adjusting the relevant preparation parameters according to Table 1.

The preparation parameters and performance parameters of each example and comparative example are shown in Table 1.

**Table 1**

| | Housing material | Yield strength b of housing (MPa) | Thickness a of housing (mm) | 3a + 0.001b | P (%) | k | d (mm) | Impact test pass rate |
|---|---|---|---|---|---|---|---|---|
| Example 1 | Q210 carbon steel | 210 | 0.05 | 0.36 | 40 | 0.02 | 21 | 15/20 |
| Example 2 | Q210 carbon steel | 210 | 0.1 | 0.51 | 40 | 0.02 | 21 | 17/20 |
| Example 3 | Q210 carbon steel | 210 | 0.15 | 0.66 | 40 | 0.02 | 21 | 18/20 |
| Example 4 | Q210 carbon steel | 210 | 0.2 | 0.81 | 40 | 0.02 | 21 | 19/20 |
| Example 5 | Q210 carbon steel | 210 | 0.35 | 1.26 | 40 | 0.02 | 21 | 16/20 |
| Example 6 | Q210 carbon steel | 210 | 0.4 | 1.41 | 40 | 0.02 | 21 | 15/20 |
| Example 7 | Q210 carbon steel | 210 | 0.5 | 1.71 | 40 | 0.02 | 21 | 15/20 |
| Example 8 | 26# carbon steel | 150 | 0.35 | 1.20 | 20 | 0.03 | 20.5 | 15/20 |
| Example 9 | 28# carbon steel | 180 | 0.35 | 1.23 | 20 | 0.03 | 20.5 | 17/20 |
| Example 10 | Q210 carbon steel | 210 | 0.35 | 1.26 | 20 | 0.03 | 20.5 | 18/20 |
| Example 11 | Q235 carbon steel | 230 | 0.35 | 1.28 | 20 | 0.03 | 20.5 | 19/20 |
| Example 12 | 45# carbon steel | 280 | 0.35 | 1.33 | 20 | 0.03 | 20.5 | 16/20 |
| Example 13 | Q350 carbon steel | 350 | 0.35 | 1.40 | 20 | 0.03 | 20.5 | 15/20 |
| Example 14 | Pure iron | 10 | 0.35 | 1.06 | 20 | 0.03 | 20.5 | 14/20 |
| Example 15 | 42CrMo4 | 600 | 0.35 | 1.65 | 20 | 0.03 | 20.5 | 13/20 |
| Example 16 | Q220 carbon steel | 220 | 0.35 | 1.27 | 35 | 0.005 | 20.7 | 15/20 |
| Example 17 | Q220 carbon steel | 220 | 0.35 | 1.27 | 35 | 0.01 | 20.7 | 18/20 |
| Example 18 | Q220 carbon steel | 220 | 0.35 | 1.27 | 35 | 0.015 | 20.7 | 19/20 |
| Example 19 | Q220 carbon steel | 220 | 0.35 | 1.27 | 35 | 0.02 | 20.7 | 20/20 |
| Example 20 | Q220 carbon steel | 220 | 0.35 | 1.27 | 35 | 0.025 | 20.7 | 18/20 |
| Example 21 | Q220 carbon steel | 220 | 0.35 | 1.27 | 35 | 0.03 | 20.7 | 19/20 |
| Example 22 | Q220 carbon steel | 220 | 0.35 | 1.27 | 35 | 0.04 | 20.7 | 16/20 |
| Example 23 | Q220 carbon steel | 220 | 0.35 | 1.27 | 35 | 0.001 | 20.7 | 14/20 |
| Example 24 | Q220 carbon steel | 220 | 0.35 | 1.27 | 35 | 0.1 | 20.7 | 13/20 |
| Example 25 | Q220 carbon steel | 220 | 0.35 | 1.27 | 35 | 0.03 | 1 | 16/20 |
| Example 26 | Q220 carbon steel | 220 | 0.35 | 1.27 | 35 | 0.03 | 15 | 18/20 |
| Example 27 | Q220 carbon steel | 220 | 0.35 | 1.27 | 35 | 0.03 | 50 | 19/20 |
| Example 28 | Q220 carbon steel | 220 | 0.35 | 1.27 | 35 | 0.03 | 100 | 16/20 |
| Example 29 | 36# carbon steel | 205 | 0.1 | 0.51 | 10 | 0.025 | 21 | 15/20 |
| Example 30 | 36# carbon steel | 205 | 0.1 | 0.51 | 20 | 0.025 | 21 | 17/20 |
| Example 31 | 36# carbon steel | 205 | 0.1 | 0.51 | 30 | 0.025 | 21 | 18/20 |
| Example 32 | 36# carbon steel | 205 | 0.1 | 0.51 | 40 | 0.025 | 21 | 19/20 |
| Example 33 | 36# carbon steel | 205 | 0.1 | 0.51 | 70 | 0.025 | 21 | 15/20 |
| Example 34 | 36# carbon steel | 205 | 0.1 | 0.51 | 80 | 0.025 | 21 | 11/20 |
| Example 35 | 36# carbon steel | 205 | 0.1 | 0.51 | 5 | 0.025 | 21 | 10/20 |
| Comparative Example 1 | Q210 carbon steel | 210 | 0.01 | 0.24 | 40 | 0.02 | 21 | 7/20 |
| Comparative Example 2 | Q210 carbon steel | 210 | 0.8 | 2.61 | 40 | 0.02 | 21 | 8/20 |
| Comparative Example 3 | Q300 carbon steel | 300 | 0.01 | 0.33 | 40 | 0.02 | 21 | 8/20 |
| Comparative Example 4 | Q300 carbon steel | 300 | 0.8 | 2.7 | 40 | 0.02 | 21 | 7/20 |
| Comparative Example 5 | 20# carbon steel | 150 | 0.05 | 0.3 | 40 | 0.02 | 21 | 5/20 |
| Comparative Example 6 | Q350 carbon steel | 350 | 0.5 | 1.85 | 40 | 0.02 | 21 | 4/20 |

| | | | | | | | | |
|---|---|---|---|---|---|---|---|---|
| Note: "P" in Table 1 represents the volume proportion of the negative electrode current collector in the electrode assembly. | | | | | | | | |

From Examples 1 to 35 and Comparative Examples 1 and 2, it can be seen that by controlling the range of the thickness a of the housing within the range of the present application and ensuring that the thickness a of the housing and the yield strength b of the housing satisfy 0.3 < 3a + 0.001b < 1.8, the cylindrical lithium-ion batteries in the examples of the present application have a higher impact test pass rate, indicating an increased impact test pass rate of the cylindrical secondary battery. In contrast, the cylindrical lithium-ion batteries of the comparative examples, with the thickness a of the housing not being within the range of the present application and/or the thickness a of the housing and yield strength b of the housing not satisfying 0.3 < 3a + 0.001b < 1.8, have a lower impact test pass rate, indicating a poorer impact test pass rate of the cylindrical secondary batteries in the comparative examples.

The thickness of the housing typically affects the impact test pass rate of the cylindrical secondary battery. From Examples 1 to 7 and Comparative Examples 1 to 4, it can be seen that cylindrical secondary batteries with a housing thickness within the range of the present application have a higher impact test pass rate.

The relationship between the thickness a of the housing and the yield strength b of the housing, expressed as 3a + 0.001b, typically affects the impact test pass rate of the cylindrical secondary battery. From Examples 1 to 15, Comparative Examples 1 and 2, and Comparative Examples 5 and 6, it can be seen that cylindrical secondary batteries with a value of 3a + 0.001b within the range of the present application have a higher impact test pass rate.

The yield strength of the housing typically affects the impact test pass rate of the cylindrical secondary battery. From Examples 8 to 15, it can be seen that cylindrical secondary batteries with a yield strength of a housing within the range of the present application have a higher impact test pass rate.

The value of the proportionality coefficient k typically affects the impact test pass rate of the cylindrical secondary battery. From Examples 16 to 24, it can be seen that cylindrical secondary batteries with a proportionality coefficient k within the range of the present application have a higher impact test pass rate.

The diameter d of the electrode assembly typically affects the impact test pass rate of the cylindrical secondary battery. From Examples 21 and 25 to 28, it can be seen that cylindrical secondary batteries with a diameter d of an electrode assembly within the range of the present application have a higher impact test pass rate.

The volume proportion of the negative electrode current collector in the electrode assembly typically affects the impact test pass rate of the cylindrical secondary battery. From Examples 29 to 35, it can be seen that cylindrical secondary batteries with a volume proportion of a negative electrode current collector in an electrode assembly within the range of the present application have a higher impact test pass rate.

It should be noted that, in this document, relational terms such as first and second are used only to distinguish one entity or operation from another entity or operation, and do not necessarily require or imply any such actual relationship or order between these entities or operations. Moreover, the terms "comprise," "include," or any other variants thereof are intended to cover non-exclusive inclusion, such that a process, method, article, or equipment that includes a series of elements includes not only those elements but also other elements not explicitly listed, or elements inherent to such a process, method, article, or equipment.

Each embodiment in this specification is described in a related manner, and identical or similar parts among embodiments can be referred to each other, with each embodiment focusing on the differences from other embodiments.

The above descriptions are only preferred embodiments of the present application and are not intended to limit the protection scope of the present application. Any modifications, equivalent replacements, improvements, and the like made within the spirit and principles of the present application are included in the protection scope of the present application.

## Claims

1. A cylindrical secondary battery, comprising an electrode assembly and a housing accommodating the electrode assembly, wherein the electrode assembly comprises a positive electrode plate, a negative electrode plate, and a separator disposed between the positive electrode plate and the negative electrode plate; and
a thickness of the housing is a mm, a yield strength of the housing is b MPa, and a and b satisfy: 0.3 < 3a + 0.001b < 1.8, and 0.05 ≤ a ≤ 0.5.

2. The cylindrical secondary battery according to claim 1, wherein 150 ≤ b ≤ 350.

3. The cylindrical secondary battery according to claim 1 or 2, wherein 180 ≤ b ≤ 230.

4. The cylindrical secondary battery according to any one of claims 1 to 3, wherein 0.1 ≤ a ≤ 0.2.

5. The cylindrical secondary battery according to any one of claims 1 to 4, wherein a gap between the electrode assembly and the housing is C mm, a diameter of the electrode assembly is d mm, and C and d satisfy: C = kd, wherein k is a proportionality coefficient, 0.005 ≤ k ≤ 0.04, and 1 ≤ d ≤ 100.

6. The cylindrical secondary battery according to claim 5, wherein 0.01 ≤ k ≤ 0.03.

7. The cylindrical secondary battery according to claim 5, wherein 15 ≤ d ≤ 50.

8. The cylindrical secondary battery according to any one of claims 1 to 7, wherein the negative electrode plate comprises a negative electrode current collector, and a volume proportion of the negative electrode current collector in the electrode assembly is 10% to 70%.

9. The cylindrical secondary battery according to claim 8, wherein the volume proportion of the negative electrode current collector in the electrode assembly is 20% to 40%.

10. The cylindrical secondary battery according to any one of claims 1 to 9, wherein the negative electrode current collector is copper foil.

11. The cylindrical secondary battery according to any one of claims 1 to 10, wherein a material of the housing is selected from any one of 45# carbon steel, 304 stainless steel, Q210 carbon steel, Q220 carbon steel, Q235 carbon steel, Q350 carbon steel, 26# carbon steel, 28# carbon steel, 36# carbon steel, pure iron, 40Cr, 20CrMnTi, 35CrMo, or 42CrMo4.

12. An electronic device, comprising the cylindrical secondary battery according to any one of claims 1 to 11.
